# EUROPEAN PATENT APPLICATION

(11) **EP 4 797 630 A1**
(43) Date of publication of application: **26.08.2026**
(21) Application number: 24887539.5
(22) Date of filing: 15.08.2024
(51) Int. Cl.: H04L 25/02

(54) **CHANNEL STATE INFORMATION DETERMINATION METHOD AND APPARATUS**

(30) Priority: 10.11.2023 CN 202311502723
(71) Applicant: HUAWEI TECHNOLOGIES CO., LTD., Shenzhen 518129 (CN)
(72) Inventor: GAO, Junhui, Shenzhen, Guangdong 518129 (CN); YE, Chencheng, Shenzhen, Guangdong 518129 (CN); XU, Jun, Shenzhen, Guangdong 518129 (CN); WANG, Xiaohan, Shenzhen, Guangdong 518129 (CN)
(74) Representative: Thun, Clemens
(86) International application number: PCT/CN2024/112482
(87) International publication number: WO 2025/097919

(57) **Abstract**

This application provides a channel state information CSI determining method and apparatus, and relates to the field of wireless communication technologies. The method includes: sending first indication information and second indication information to a terminal device; receiving a demodulation reference signal DMRS from the terminal device; and determining CSI based on the DMRS. The first indication information indicates N sounding reference signal SRS precodes. The N SRS precodes are in one-to-one correspondence with N SRS ports. The second indication information indicates M DMRS precodes, the M DMRS precodes are in one-to-one correspondence with M DMRS ports, any one of the M DMRS precodes includes a weighted sum of K SRS precodes, and the K SRS precodes belong to the N SRS precodes. K is an integer greater than 0 and less than or equal to N, and N is a positive integer. According to the CSI determining method and apparatus in this application, a problem such as channel CSI aging caused by a relatively long SRS channel estimation cycle can be alleviated, thereby improving wireless communication efficiency.

## Description

This application claims priority to Chinese Patent Application No. 202311502723.7, filed with the China National Intellectual Property Administration on November 10, 2023 and entitled "CHANNEL STATE INFORMATION DETERMINING METHOD AND APPARATUS", which is incorporated herein by reference in its entirety.

### TECHNICAL FIELD

Embodiments of the present invention relate to the field of wireless communication technologies, and specifically, to a channel state information determining method and apparatus.

### BACKGROUND

In the field of wireless communication technologies, precoding is a preprocessing manner of a signal transmitter. Data of the transmitter may be encoded through precoding, to alleviate a multipath effect and reduce interference, thereby improving a channel capacity and robustness of a receiver. Channel estimation is a process of estimating a channel parameter by using a sample sequence obtained in a communication system. The precoding technology and channel estimation can be combined, to reduce interference thereby improving wireless communication efficiency. In a time division duplex (time division duplex, TDD) system, because a same frequency band is used on an uplink channel and a downlink channel, reciprocity exists. A base station may obtain channel state information (channel state information, CSI) of a downlink channel by estimating an uplink sounding reference signal (sounding reference signal, SRS) based on reciprocity between uplink and downlink channels, and then implement precoding. With development of communication systems, a quantity of terminal devices continuously increases. However, a radio resource used to send a pilot signal is limited. Scheduling a pilot signal resource in a time division multiplexing manner is an effective solution. However, a problem such as channel CSI aging caused by a relatively long SRS channel estimation cycle exists.

### SUMMARY

This application provides a channel state information determining method and apparatus.

According to a first aspect, this application relates to a channel state information determining method, applied to a network device, and including: sending first indication information and second indication information to a terminal device; receiving a DMRS from the terminal device; and determining channel state information based on the DMRS.

The first indication information indicates N sounding reference signal SRS precodes. The N SRS precodes are in one-to-one correspondence with N SRS ports. The second indication information indicates M demodulation reference signal DMRS precodes, the M DMRS precodes are in one-to-one correspondence with M DMRS ports, any one of the M DMRS precodes includes a weighted sum of K SRS precodes, and the K SRS precodes belong to the N SRS precodes. K is an integer greater than 0 and less than or equal to N, and N is a positive integer.

According to the channel state information determining method in this application, when knowing both the DMRS precodes and the SRS precodes, the network device may determine weighting coefficients of the SRS precodes based on the DMRS precodes, or the network device may indicate the weighting coefficients of the SRS precodes to the terminal device, to indicate the DMRS precodes to the terminal device.

A channel estimation result H_{SRS} obtained by the network device by performing channel estimation by using an SRS is the CSI. The DMRS may also be used for channel estimation. Therefore, the network device may obtain a DMRS-based channel estimation result H_{DMRS} based on the DMRS. The network device sends the first indication information to the terminal device, in other words, the network device further knows the SRS precodes. In this way, the network device can update H_{SRS}, in other words, update the CSI, through calculation by using the DMRS-based channel estimation result H_{DMRS}, the SRS precodes indicated by the first indication information, and the weighting coefficients of the SRS precodes corresponding to the DMRS precodes indicated by the second indication information. Because the DMRS has a higher update frequency than the SRS, an update frequency of H_{DMRS} obtained through calculation based on the channel estimation result of the DMRS is correspondingly higher. The CSI may be determined based on H_{DMRS} with the higher update frequency, to achieve an objective of shortening an SRS sending cycle, so that the obtained CSI is more accurate and a delay is shorter, thereby alleviating a CSI aging status.

In a possible embodiment, sending the second indication information to the terminal device may include: sending third indication information and fourth indication information to the terminal device.

The third indication information indicates a weighting coefficient indication bitmap or a weighting coefficient combinatorial number corresponding to a DMRS port Pᵢ, and the weighting coefficient indication bitmap or the weighting coefficient combinatorial number indicates the K SRS precodes that correspond to the DMRS port Pᵢ and whose weighting coefficients are not 0. The fourth indication information indicates the weighting coefficients of the K SRS precodes corresponding to the DMRS port Pᵢ.

Any DMRS port Pᵢ of the M DMRS ports is used as an example for description. A weighting coefficient indication bitmap or a weighting coefficient combinatorial number indicates the K SRS precodes that correspond to the DMRS port Pᵢ and whose weighting coefficients are not 0. It may be understood that, the weighting coefficient indication bitmap is in a form of a bitmap (bitmap). For example, the weighting coefficient indication bitmap may indicate "0" or "1" to indicate whether a weighting coefficient of a corresponding SRS precode is 0.

When the weighting coefficients of the K SRS precodes are weighting coefficients that are of SRS precodes and whose values are not 0 in the weighting coefficients of the N SRS precodes (it should be noted that "weighting coefficients of SRS precodes" means that a DMRS precode may be represented through linear weighting by using the SRS precodes), the weighting coefficient indication bitmap or the weighting coefficient combinatorial number may indicate K non-0 weighting coefficients of SRS precodes. The weighting coefficients of the SRS precodes are correlated to the DMRS precode, and a weighting coefficient that is of an SRS precode and whose value is 0 does not affect a value of the DMRS precode. Therefore, only a weighting coefficient that is of an SRS precode and whose value is not 0 is indicated, so that communication overheads can be reduced.

In a possible embodiment, the channel state information determining method may further include: sending first index indication information to the terminal device.

The first index indication information indicates indexes of the SRS port and the DMRS port that correspond to a weighting coefficient that is of the SRS precode and whose modulus value is the largest in weighting coefficients of R1 SRS precodes, and R1 is a product value of M and K.

For example, according to the channel state information determining method in this application, normalization processing may be further performed on the weighting coefficients of the SRS precodes based on the weighting coefficient that is of the SRS precode and whose value is the largest. Through normalization processing, the weighting coefficients of the SRS precodes may be limited to a value range (the value range may be, for example, [0, 1]), thereby reducing indication overheads of the weighting coefficients of the SRS precodes.

In a possible embodiment, the channel state information determining method may further include: sending second index indication information to the terminal device.

The second index indication information indicates an index of an SRS port corresponding to a weighting coefficient that is of the SRS precode and whose modulus value is the largest in weighting coefficients of K SRS precodes corresponding to any DMRS port Pᵢ of the M DMRS ports.

According to the channel state information determining method in this application, for any DMRS port Pᵢ of the M DMRS ports, a weighting coefficient that is of an SRS precode and whose modulus value is the largest may be determined from weighting coefficients of K SRS precodes corresponding to the DMRS port Pᵢ, and normalization specific to the DMRS port Pᵢ may be further performed based on the weighting coefficient that is of the SRS precode and whose modulus value is the largest, so that a quantization error of normalization can be reduced.

For example, the second indication information may include the first index indication information or the second index indication information.

In a possible example, the channel state information determining method may further include: sending first SRS port indication information and/or second SRS port indication information to the terminal device.

The first SRS port indication information indicates the terminal device to send an SRS through a first SRS port in the N SRS ports. The second SRS port indication information indicates the terminal device not to send an SRS through a second SRS port in the N SRS ports.

According to the channel state information determining method in this application, the first SRS port indication information and/or the second SRS port indication information are/is sent to the terminal device. The first SRS port indication information indicates the terminal device to send an SRS through the first SRS port in the N SRS ports. The second SRS port indication information indicates the terminal device not to send an SRS through the second SRS port in the N SRS ports. In other words, an SRS may be sent through the first SRS port or an SRS other than the second SRS port in the N SRS ports of the terminal device. After receiving the SRS, the base station may perform channel estimation to update CSI. In addition, according to the channel state information determining method in this application, an SRS is sent through the first SRS port or an SRS other than the second SRS port in the N SRS ports of the terminal device, so that the SRS port can be flexibly configured, and there is no need to send an SRS through each SRS port. Therefore, a quantity of SRS ports can be reduced, SRS pilot overheads can be reduced, or an SRS sending cycle can be shortened, to alleviate CSI channel aging (when a quantity of required SRS ports increases and an SRS pilot resource does not increase, a corresponding policy includes prolonging an SRS sending cycle. This causes CSI channel aging).

In a possible example, the first SRS port indication information and/or the second SRS port indication information are/is indicated by downlink control information (Downlink Control Information, DCI).

In a possible example, the channel state information determining method may further include: receiving an SRS sent by the terminal device through at least one third SRS port in the N SRS ports.

A weighting coefficient of the SRS precode corresponding to any DMRS port is not indicated to any SRS port Pₛᵣₛᵢ of third SRS ports in a first time period; or an accumulated modulus value corresponding to the SRS port Pₛᵣₛᵢ is less than a target modulus value, the accumulated modulus value is obtained by summing up at least one element modulus value, each element modulus value is correlated to a target moment, one of the M DMRS ports, and a weighting coefficient of the SRS precode of the SRS port Pₛᵣₛᵢ corresponding to the DMRS port, any two element modulus values correspond to different target moments and/or DMRS ports, and the target moment is determined based on a second time period.

For example, an SRS sending condition of the SRS port may be predefined by using a protocol, and an SRS port that meets the SRS sending condition is a third SRS port. For any SRS port Pₛᵢ of the N SRS ports, if a weighting coefficient of an SRS precode corresponding to any DMRS port is not indicated to the SRS port Pₛᵢ in the first time period, or if an accumulated modulus value corresponding to the SRS port Pₛᵢ is less than the target modulus value, the SRS port Pₛᵢ meets the SRS sending condition, the SRS port Pₛᵢ belongs to the third SRS ports, and an SRS is sent on the SRS port Pₛᵢ

As described above in this application, the DMRS precode is represented as a form of the weighted sum of the weighting coefficients of the N SRS precodes and the K SRS precodes, and therefore the parameter, namely, the weighting coefficient of the SRS precode is introduced. If a value of the weighting coefficient of the SRS precode is 0 or is relatively small, when channel estimation is performed based on an SRS with the assistance of a DMRS, channel information of an SRS port corresponding to the SRS precode is not updated or is not accurately updated. According to the channel state information determining method in this application, for example, an SRS sending condition of the SRS port may be predefined by using a protocol. In this way, when an SRS port meets the SRS sending condition, the terminal device may send an SRS to the base station, and the base station may receive the SRS to perform channel estimation. Alternatively, indication information may be sent to flexibly configure the SRS port, and there is no need to send an SRS through each SRS port. Therefore, a quantity of SRS ports can be reduced, SRS pilot overheads can be reduced, or an SRS sending cycle can be shortened, to alleviate CSI channel aging. In addition, a modulus value of a weighting coefficient corresponding to an SRS port (the SRS port belongs to the third SRS ports) whose channel information cannot be updated or whose channel information is not accurately updated is 0 or relatively small when channel estimation is performed based on an SRS with the assistance of a DMRS. According to the channel state information determining method in this application, a third SRS port corresponding to a weighting coefficient whose modulus value is 0 or relatively small may be determined from the N SRS ports by using an SRS sending condition defined in terms of a time period or a modulus value, and the terminal device sends an SRS through the third SRS port, so that the base station receives the SRS sent through the third SRS port and can obtain CSI, to resolve a problem that CSI ages because channel information corresponding to the third SRS port is not updated or not accurately updated.

In a possible example, the first time period and/or the second time period are/is determined based on an SRS sending cycle, and the target moment is any moment at which the DMRS is received in the second time period.

In a possible example, the first time period and/or the second time period may be, for example, one or more SRS sending cycles.

In a possible example, the first time period and/or the second time period may alternatively be, for example, a time period corresponding to T time units before a time unit at which a next SRS is sent in an SRS sending cycle. The time unit may be, for example, a slot or a symbol.

In a possible example, according to a channel state information determining method in another embodiment of this disclosure, the element modulus value is further correlated to a scale factor, the scale factor is correlated to a target time interval, and the target time interval represents a time interval between the target moment and a moment at which the SRS is sent next time.

According to a second aspect, this application relates to a channel state information determining method, applied to a terminal device, and including: receiving first indication information and second indication information; determining a DMRS based on the first indication information and the second indication information; and sending the DMRS to a network device.

The first indication information indicates N sounding reference signal SRS precodes, and the N SRS precodes are in one-to-one correspondence with N SRS ports. The second indication information indicates M demodulation reference signal DMRS precodes, the M DMRS precodes are in one-to-one correspondence with M DMRS ports, any one of the M DMRS precodes includes a weighted sum of K SRS precodes, and the K SRS precodes belong to the N SRS precodes. K is an integer greater than 0 and less than or equal to N, and N is a positive integer.

In a possible example, receiving the second indication information includes: receiving third indication information and fourth indication information.

The third indication information indicates a weighting coefficient indication bitmap or a weighting coefficient combinatorial number corresponding to any DMRS port Pᵢ of the M DMRS ports, and the weighting coefficient indication bitmap or the weighting coefficient combinatorial number indicates the K SRS precodes that correspond to the DMRS port Pᵢ and whose weighting coefficients are not 0. The fourth indication information indicates the weighting coefficients of the K SRS precodes corresponding to the DMRS port Pᵢ.

In a possible example, the channel state information determining method further includes: receiving first index indication information.

The first index indication information indicates indexes of the SRS port and the DMRS port that correspond to a weighting coefficient that is of the SRS precode and whose modulus value is the largest in weighting coefficients of R1 SRS precodes, and R1 is a product value of M and K.

In a possible example, the channel state information determining method further includes: receiving second index indication information.

The second index indication information indicates an index of an SRS port corresponding to a weighting coefficient that is of the SRS precode and whose modulus value is the largest in weighting coefficients of K SRS precodes corresponding to any DMRS port Pᵢ of the M DMRS ports.

In a possible example, the channel state information determining method further includes: receiving first SRS port indication information and/or second SRS port indication information.

The first SRS port indication information indicates the terminal device to send an SRS through a first SRS port in the N SRS ports, and the second SRS port indication information indicates the terminal device not to send an SRS through a second SRS port in the N SRS ports.

In a possible example, the channel state information determining method further includes:
sending an SRS to the network device through a third SRS port in the N SRS ports.

A weighting coefficient of the SRS precode corresponding to any DMRS port is not indicated to any SRS port Pₛᵣₛᵢ of third SRS ports in a first time period; or an accumulated modulus value corresponding to the SRS port Pₛᵣₛᵢ is less than a target modulus value, the accumulated modulus value is obtained by summing up at least one element modulus value, each element modulus value is correlated to a target moment, one of the M DMRS ports, and a weighting coefficient of the SRS precode of the SRS port Pₛᵣₛᵢ corresponding to the DMRS port, any two element modulus values correspond to different target moments and/or DMRS ports, and the target moment is determined based on a second time period.

In a possible example, the first time period and/or the second time period are/is determined based on an SRS sending cycle, and the target moment is any moment at which the DMRS is received in the second time period.

In a possible example, the element modulus value is further correlated to a scale factor, the scale factor is negatively correlated to a target time interval, and the target time interval represents a time interval between the target moment and a moment at which the SRS is sent next time.

According to a third aspect, this application relates to a channel state information determining apparatus, including a transceiver unit and a processing unit.

The processing unit is configured to determine first indication information and second indication information.

The first indication information indicates N sounding reference signal SRS precodes, and the N SRS precodes are in one-to-one correspondence with N SRS ports. The second indication information indicates M demodulation reference signal DMRS precodes, the M DMRS precodes are in one-to-one correspondence with M DMRS ports, any one of the M DMRS precodes includes a weighted sum of K SRS precodes, and the K SRS precodes belong to the N SRS precodes. K is an integer greater than 0 and less than or equal to N, and N is a positive integer.

The transceiver unit is configured to: send the first indication information and the second indication information to a terminal device; and receive a DMRS from the terminal device.

The processing unit is further configured to determine channel state information based on the DMRS.

In a possible example, the transceiver unit is configured to send third indication information and fourth indication information to the terminal device. The third indication information indicates a weighting coefficient indication bitmap or a weighting coefficient combinatorial number corresponding to any DMRS port Pᵢ of the M DMRS ports, and the weighting coefficient indication bitmap or the weighting coefficient combinatorial number indicates the K SRS precodes that correspond to the DMRS port Pᵢ and whose weighting coefficients are not 0. The fourth indication information indicates the weighting coefficients of the K SRS precodes corresponding to the DMRS port Pᵢ.

In a possible example, the transceiver unit is further configured to send first index indication information to the terminal device. The first index indication information indicates indexes of the SRS port and the DMRS port that correspond to a weighting coefficient that is of the SRS precode and whose modulus value is the largest in weighting coefficients of R1 SRS precodes, and R1 is a product value of M and K.

In a possible example, the transceiver unit is further configured to send second index indication information to the terminal device. The second index indication information indicates an index of an SRS port corresponding to a weighting coefficient that is of the SRS precode and whose modulus value is the largest in weighting coefficients of K SRS precodes corresponding to any DMRS port Pᵢ of the M DMRS ports.

In a possible example, the transceiver unit is further configured to send first SRS port indication information and/or second SRS port indication information to the terminal device. The first SRS port indication information indicates the terminal device to send an SRS through a first SRS port in the N SRS ports, and the second SRS port indication information indicates the terminal device not to send an SRS through a second SRS port in the N SRS ports.

In a possible example, the first SRS port indication information and/or the second SRS port indication information are/is indicated by downlink control information DCI.

In a possible example, the transceiver unit is further configured to receive an SRS sent by the terminal device through a third SRS port in the N SRS ports. A weighting coefficient of the SRS precode corresponding to any DMRS port is not indicated to any SRS port Pₛᵣₛᵢ of third SRS ports in a first time period; or an accumulated modulus value corresponding to the SRS port Pₛᵣₛᵢ is less than a target modulus value, the accumulated modulus value is obtained by summing up at least one element modulus value, each element modulus value is correlated to a target moment, one of the M DMRS ports, and a weighting coefficient of the SRS precode of the SRS port Pₛᵣₛᵢ corresponding to the DMRS port, any two element modulus values correspond to different target moments and/or DMRS ports, and the target moment is determined based on a second time period.

In a possible example, the first time period and/or the second time period are/is determined based on an SRS sending cycle, and the target moment is any moment at which the DMRS is received in the second time period.

In a possible example, the element modulus value is further correlated to a scale factor, the scale factor is negatively correlated to a target time interval, and the target time interval represents a time interval between the target moment and a moment at which the SRS is sent next time.

According to a fourth aspect, this application relates to a channel state information determining apparatus, including a transceiver unit and a processing unit.

The transceiver unit is configured to receive first indication information and second indication information from a network device.

The first indication information indicates N sounding reference signal SRS precodes, and the N SRS precodes are in one-to-one correspondence with N SRS ports. The second indication information indicates M demodulation reference signal DMRS precodes, the M DMRS precodes are in one-to-one correspondence with M DMRS ports, any one of the M DMRS precodes includes a weighted sum of K SRS precodes, and the K SRS precodes belong to the N SRS precodes. K is an integer greater than 0 and less than or equal to N, and N is a positive integer.

The processing unit is configured to determine a DMRS based on the first indication information and the second indication information.

The transceiver unit is further configured to send the DMRS to the network device.

In a possible example, the transceiver unit is further configured to receive third indication information and fourth indication information. The third indication information indicates a weighting coefficient indication bitmap or a weighting coefficient combinatorial number corresponding to any DMRS port Pᵢ of the M DMRS ports, and the weighting coefficient indication bitmap or the weighting coefficient combinatorial number indicates the K SRS precodes that correspond to the DMRS port Pᵢ and whose weighting coefficients are not 0. The fourth indication information indicates the weighting coefficients of the K SRS precodes corresponding to the DMRS port Pᵢ.

In a possible example, the transceiver unit is further configured to receive first index indication information. The first index indication information indicates indexes of the SRS port and the DMRS port that correspond to a weighting coefficient that is of the SRS precode and whose modulus value is the largest in weighting coefficients of R1 SRS precodes, and R1 is a product value of M and K.

In a possible example, the transceiver unit is further configured to receive second index indication information. The second index indication information indicates an index of an SRS port corresponding to a weighting coefficient that is of the SRS precode and whose modulus value is the largest in weighting coefficients of K SRS precodes corresponding to any DMRS port Pᵢ of the M DMRS ports.

In a possible example, the transceiver unit is further configured to receive first SRS port indication information and/or second SRS port indication information. The first SRS port indication information indicates the terminal device to send an SRS through a first SRS port in the N SRS ports, and the second SRS port indication information indicates the terminal device not to send an SRS through a second SRS port in the N SRS ports.

In a possible example, the transceiver unit is further configured to send an SRS to the network device through a third SRS port in the N SRS ports. A weighting coefficient of the SRS precode corresponding to any DMRS port is not indicated to any SRS port Pₛᵣₛᵢ of third SRS ports in a first time period; or an accumulated modulus value corresponding to the SRS port Pₛᵣₛᵢ is less than a target modulus value, the accumulated modulus value is obtained by summing up at least one element modulus value, each element modulus value is correlated to a target moment, one of the M DMRS ports, and a weighting coefficient of the SRS precode of the SRS port Pₛᵣₛᵢ corresponding to the DMRS port, any two element modulus values correspond to different target moments and/or DMRS ports, and the target moment is determined based on a second time period.

In a possible example, the first time period and/or the second time period are/is determined based on an SRS sending cycle, and the target moment is any moment at which the DMRS is received in the second time period.

In a possible example, the element modulus value is further correlated to a scale factor, the scale factor is negatively correlated to a target time interval, and the target time interval represents a time interval between the target moment and a moment at which the SRS is sent next time.

According to a fifth aspect, this application relates to a communication apparatus, including a processor and an interface circuit. The interface circuit is configured to: receive a signal from a communication apparatus other than the communication apparatus and transmit the signal to the processor; or send a signal from the processor to a communication apparatus other than the communication apparatus. The processor is configured to perform the foregoing channel state information determining method by using a logic circuit or by executing code instructions.

In some embodiments, the instructions are stored in a memory. The memory is communicatively connected to or coupled to the processor.

In some embodiments, the communication apparatus is a chip.

According to a sixth aspect, this application provides a communication system. The communication system includes the communication apparatus according to any one of the third aspect or the implementations of the third aspect, and at least one communication apparatus according to any one of the fourth aspect or the implementations of the fourth aspect.

According to a seventh aspect, this application provides a computer-readable storage medium storing computer instructions. When the computer instructions are executed, a computer is enabled to perform the foregoing channel state information determining method. In some embodiments, the computer-readable storage medium is a non-transitory storage medium.

According to an eighth aspect, this application relates to a computer program product, including a computer program. The computer program is stored in a readable storage medium, and when the computer program is executed, a computer is enabled to implement the foregoing channel state information determining method.

### BRIEF DESCRIPTION OF DRAWINGS

The following describes accompanying drawings used in embodiments of this application.
FIG. 1 schematically shows a procedure in which a base station and a terminal device perform channel estimation based on an SRS;
FIG. 2A is a diagram of a system architecture of a channel state information determining method and apparatus according to an embodiment of this disclosure;
FIG. 2B is a diagram of another system architecture of a channel state information determining method and apparatus according to an embodiment of this disclosure;
FIG. 3A is a schematic flowchart of a channel state information determining method according to an embodiment of this disclosure;
FIG. 3B is a diagram of interaction between a base station and a terminal device in a channel state information determining method according to an embodiment of this disclosure;
FIG. 4 is a schematic flowchart of a channel state information determining method according to another embodiment of this disclosure;
FIG. 5 is a block diagram of a channel state information determining apparatus according to an embodiment of this disclosure;
FIG. 6 is a block diagram of a channel state information determining apparatus according to another embodiment of this disclosure; and
FIG. 7 is a block diagram of a communication device that can implement a channel state information determining method according to an embodiment of this disclosure.

### DESCRIPTION OF EMBODIMENTS

The following clearly and completely describes technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

In this specification, the term "and/or" is merely used to describe an association relationship between associated objects, and indicates that three relationships may exist. For example, A and/or B may indicate the following three cases: Only A exists, both A and B exist, and only B exists.

In the specification and claims in embodiments of this application, the terms "first", "second", and the like are intended to distinguish between different objects, and are not intended to describe a particular order of the objects. For example, a first target object, a second target object, and the like are intended to distinguish between different target objects, and are not intended to describe a particular order of the target objects.

In embodiments of this application, words such as "an example" or "for example" are used to represent giving an example, an illustration, or a description. Any embodiment or design solution described as "an example" or "for example" in embodiments of this application should not be explained as being more preferred or having more advantages than another embodiment or design solution. Exactly, use of the words such as "an example" or "for example" is intended to present a related concept in a specific manner.

It should be understood that, in this application, "at least one (item)" means one or more, and "a plurality of" means two or more. The term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, "a and b", "a and c", "b and c", or "a, b, and c", where a, b, and c may be singular or plural.

The following describes in detail a detailed background of the channel state information determining method in embodiments of this disclosure.

Wireless communication is a communication mode in which information is exchanged by using a characteristic that an electromagnetic wave signal is propagated in space.

In the field of wireless communication technologies, a precoding technology is a preprocessing manner of a signal transmitter. Data of the transmitter may be encoded by using the precoding technology, to alleviate a multipath effect and reduce interference, thereby improving a channel capacity and robustness of a receiver.

In a multiple-input multiple-output (multiple-input multiple-output, MIMO) system, a radio channel has random and complex characteristics, and there are various serious interferences on the channel. The precoding technology is a key technology of the MIMO system. In the precoding technology, CSI known by a transmitter is used to convert a modulated symbol stream into a data stream that adapts to a current channel. When the transmitter knows a channel state, the transmitter may perform signal preprocessing, and dynamically perform power control and phase adjustment based on channel information, to optimize some performance objectives of a receiver, such as a signal-to-noise ratio and a throughput. Through precoding, signal energy can be concentrated near a target user, to effectively resist attenuation and loss, thereby improving system performance.

The CSI describes a channel attribute of a communication link, and specifically describes a fading factor of a signal on each transmission path, namely, a value of each element in a channel gain matrix H, for example, information such as signal scattering (scattering), environment fading (fading, multipath fading or shadowing fading), and power decay of distance (power decay of distance). The CSI may enable a communication system to adapt to a current channel condition, to provide a guarantee for high-reliability and high-rate communication in a multi-antenna system. A CSI obtaining process may be understood as channel estimation, namely, a process of estimating a model parameter of an assumed channel model from received data. In a wireless communication process, a signal transmitter modulates and encodes an original signal, and a signal receiver needs to demodulate and decode a received signal, to restore the original signal. Because a signal is affected by a channel in a transmission process, a signal receiver needs to estimate the channel, to accurately recover an original signal. In channel estimation, channel noise, interference, and the like may be further eliminated to improve a signal-to-noise ratio, reduce a bit error rate, improve communication quality, and so on.

TDD is a wireless communication standard for bidirectional communication between devices with a single transmission frequency. In TDD, time is divided into several slots, and these slots are allocated to different communication parties. A device sends information in a time period, another device sends information in a next time period, and so on.

In a time division duplex wireless communication system, because a same frequency band is used on an uplink channel and a downlink channel, channel reciprocity exists. Channel reciprocity may be understood as that transmission is performed on an uplink and a downlink of a time division duplex wireless communication system in different slots of a same frequency resource. Therefore, it may be considered that transmitted signals on an uplink and a downlink experience same channel fading in relatively short time.

The precoding technology and channel estimation can be combined, to reduce interference thereby improving wireless communication efficiency. For example, a base station may obtain CSI of a downlink channel by performing channel estimation by using an uplink SRS based on reciprocity between uplink and downlink channels, and then precode downlink data.

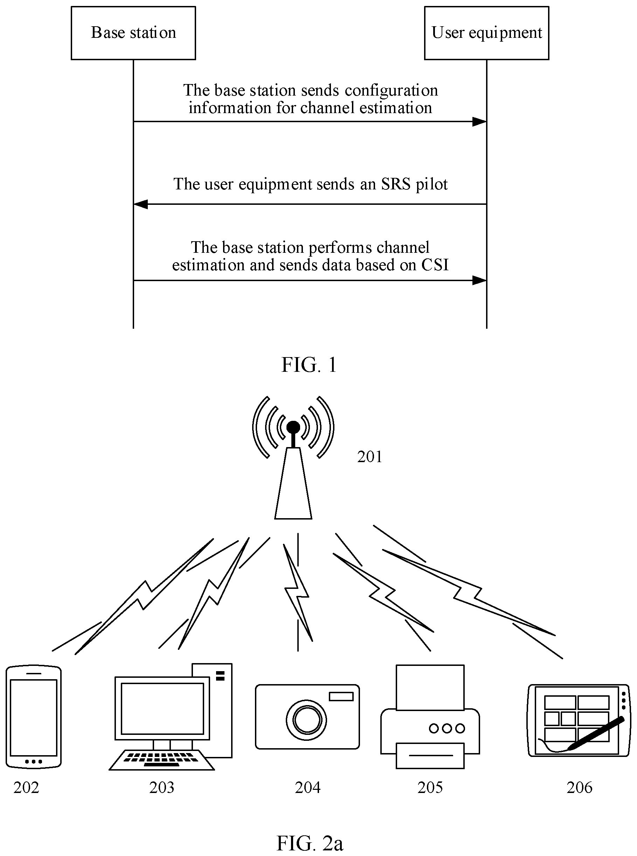

FIG. 1 schematically shows a procedure in which a base station and a terminal device perform channel estimation based on an SRS.

As shown in FIG. 1, the base station sends configuration information for channel estimation, to notify the terminal device of SRS sending time and behavior, and then the terminal device sends an SRS to the base station for channel estimation. The base station may perform channel estimation based on the SRS sent by the terminal device, to recover an uplink channel, and recover a downlink channel based on channel reciprocity. The base station sends data based on CSI of the downlink channel.

In this process, the base station may further determine an uplink precode of the terminal device based on a channel estimation result.

In some implementations, indication information of the uplink precode is sent to the terminal device through codebook-based precoding or non-codebook-based precoding.

For example, the codebook-based uplink precoding operation includes: the terminal device sends an SRS; the base station estimates an uplink channel based on the SRS, and calculates the uplink precode of the terminal device; the base station indicates an index in a codebook to the terminal device by using downlink control information (downlink control information, DCI); the terminal device determines the uplink precode based on the indication of the base station, and sends a physical uplink shared channel (physical uplink shared channel, PUSCH) and a demodulation reference signal (demodulation reference signal, DMRS) that are loaded with the uplink precode; and the base station performs channel estimation and interference estimation based on the demodulation reference signal, and performs data demodulation based on a channel estimation result and an interference estimation result.

For example, the non-codebook-based uplink precoding operation includes: the base station sends a channel state information-reference signal (channel state information-reference signal, CSI-RS); the terminal device estimates a downlink channel based on the CSI-RS, and calculates a plurality of candidate uplink precodes; the terminal device sends the candidate uplink precodes by using an SRS; the base station selects an optimal uplink precode from the candidate uplink precodes, and indicates the optimal uplink precode to the terminal device by using DCI; the terminal device sends, based on the uplink precode indicated by the base station, a demodulation reference signal and a physical uplink shared signal that are loaded with the uplink precode; and the base station performs channel estimation and interference estimation based on the demodulation reference signal, and performs data demodulation based on a channel estimation result and an interference estimation result.

Signal sending and signaling interaction between the base station and the terminal device are used as an example. At least one of the base station and the terminal device sends and receives signals through, for example, a plurality of antenna ports. Therefore, channels between all antenna ports between the base station and the terminal device need to be estimated (full-space channel estimation). This imposes a higher requirement for an SRS resource. When an SRS resource is limited, an SRS sending cycle needs to be prolonged, and consequently a cycle of obtaining channel CSI based on SRS channel estimation is correspondingly prolonged, causing severe CSI aging.

In addition, with continuous development and iteration of communication technologies, for example, a 5.5G/6G (5G-advanced generation mobile communication technology/sixth generation mobile communication technology) communication system has higher requirements for a system capacity, spectral efficiency, and the like. A future 5.5G/6G communication system is evolving toward a higher frequency band and a larger bandwidth, and a massive multiple-antenna technology (massive multiple input multiple output, Massive MIMO) plays an important role in spectral efficiency of the system. In a future MIMO system, both a base station end and a terminal device end use a massive MIMO array, and a hybrid beamforming (hybrid beamforming, HBF) architecture is considered, to improve spectral efficiency while reducing complexity. In this system architecture, SRS-based channel estimation causes a problem of severe channel estimation performance deterioration. Main causes are as follows:
(a) In dual-ended HBF of the base station end and the terminal device end, time division SRS beam sweeping needs to be performed. This prolongs an SRS sending cycle, and consequently a cycle of obtaining channel CSI based on SRS channel estimation is correspondingly prolonged, causing severe CSI aging.
(b) In a large bandwidth, a quantity of SRS frequency hopping times increases, exacerbating channel aging.
(c) In a high frequency band, channel fading is severe, and an SRS signal-to-noise ratio is significantly reduced, affecting SRS channel estimation performance.
(d) In dual-ended massive MIMO, a quantity of terminal devices and a quantity of channels in the communication system increase, and a quantity of required orthogonal SRS ports increases. Without an increase in SRS pilot overheads, only an SRS sending cycle can be prolonged, and consequently a cycle of obtaining channel CSI based on SRS channel estimation is also correspondingly prolonged, causing severe CSI aging. This reduces accuracy of downlink precoding.

To resolve a problem that an SRS signal-to-noise ratio is significantly reduced and coverage is affected, the terminal device end may send an SRS obtained after precoding processing, to measure an uplink channel, so as to improve the SRS signal-to-noise ratio. However, when channel estimation is performed based on an SRS in a time division system, there are still problems such as severe CSI aging and relatively large SRS pilot overheads caused by a relatively long SRS sending cycle.

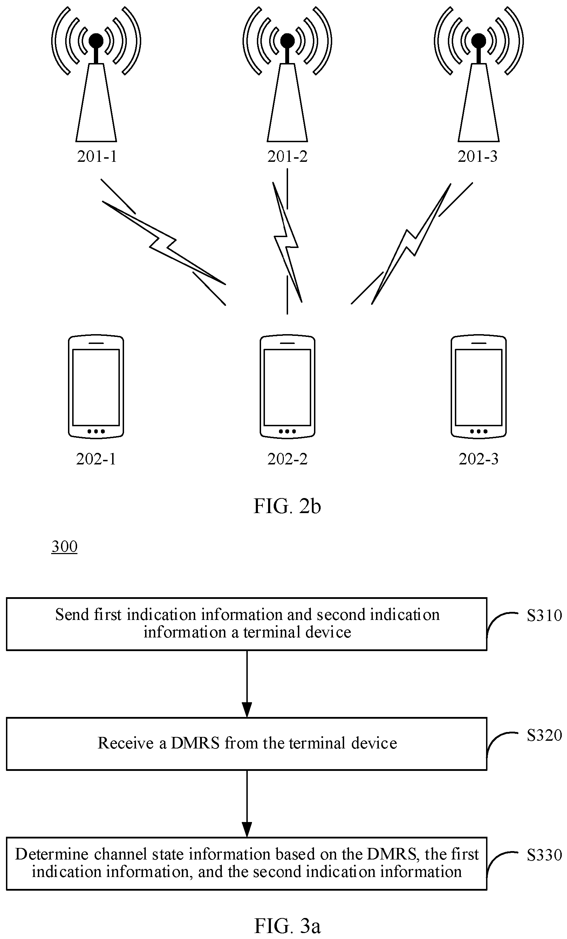

FIG. 2A and FIG. 2B each are a diagram of a system architecture of a channel state information determining method and apparatus according to an embodiment of this disclosure. It should be noted that FIG. 2A and FIG. 2B are merely examples of a system architecture to which the channel state information determining method and apparatus in embodiments of this disclosure may be applied, to help a person skilled in the art understand technical content of this disclosure. However, this does not mean that embodiments of this disclosure cannot be applied to another device, system, environment, or scenario.

FIG. 2A schematically shows a system architecture of a channel state information determining method and apparatus according to an embodiment of this disclosure.

As shown in FIG. 2A, the system architecture in this embodiment of this disclosure may include a network device 201 and terminal devices 202, 203, 204, 205, and 206.

In the system architecture shown in FIG. 2A, any plurality of terminal devices may still constitute a communication system.

The network device 201 may be understood as a hardware device that connects nodes such as various servers, personal computers (personal computer, PC), and application terminals to each other to constitute a communication network.

The following provides descriptions by using an example in which the network device is a base station (base station, BS).

In terms of a logic function, the base station may be understood as a scheduling entity (scheduling entity), and the terminal device may be understood as a subordinate entity (subordinate entity). The scheduling entity is responsible for scheduling control of service data transmission, and the subordinate entity performs service data transmission under control of the scheduling entity. For example, the base station sends an uplink scheduling grant (Grant) to the terminal device, and the terminal device sends uplink data transmission to the base station based on the uplink scheduling grant.

In terms of a physical form, the base station may include but is not limited to a macro base station (macro base station), a micro base station (micro base station), a transmission reception point (transmission reception point, TRP), a baseband unit (baseband unit, BBU), and a radio remote unit (remote radio unit). The micro base station is sometimes also referred to as a small cell (small cell). The terminal device may include but is not limited to a mobile phone, a tablet computer (tablet computer), a laptop computer (laptop computer), a wearable device (such as a smart watch, a smart band, a smart helmet, or smart glasses), and other communication devices having a wireless access capability, such as various internet of things devices, including smart home devices (such as smart meters and smart appliances), smart vehicles, and the like.

The terminal device (user equipment, UE) may be understood as a communication device used by a user, and the terminal device may include, for example, a mobile phone or a notebook computer.

Generally, based on a data transmission direction on a communication link, a communication link from the base station to the terminal device is referred to as a downlink (downlink, DL). Conversely, a communication link from the terminal device to the base station is referred to as an uplink (uplink, UL).

FIG. 2B schematically shows another system architecture of a channel state information determining method and apparatus according to an embodiment of this disclosure. As shown in FIG. 2B, the system architecture in this embodiment of this disclosure may include network devices 201-1, 201-2, and 201-3, and terminal devices 202-1, 202-2, and 202-3.

Different from the system architecture in the foregoing embodiment, the system architecture may include a plurality of network devices.

For example, a plurality of network devices may all serve one terminal device.

According to the channel state information determining method in embodiments of this disclosure, for example, the network device may send first indication information and second indication information to the terminal device; receive a DMRS from the terminal device; and determine channel state information based on the DMRS.

According to the channel state information determining method in embodiments of this disclosure, for example, the terminal device may receive the first indication information and the second indication information; and send the DMRS to the network device.

The first indication information indicates N SRS precodes, and the N SRS precodes are in one-to-one correspondence with N SRS ports. The second indication information indicates M demodulation reference signal DMRS precodes, the M DMRS precodes are in one-to-one correspondence with M DMRS ports, any one of the M DMRS precodes includes a weighted sum of K SRS precodes, and the K SRS precodes belong to the N SRS precodes. K is an integer greater than 0 and less than or equal to N, and N is a positive integer.

It should be noted that, quantities of network devices and terminal devices in the foregoing embodiments are merely examples, and any quantities of network devices and terminal devices may be set according to a requirement.

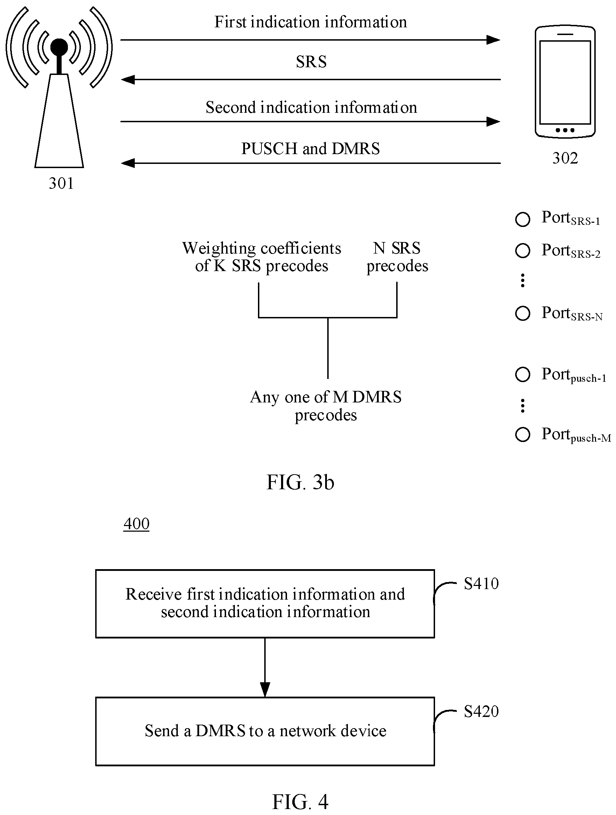

An embodiment of this disclosure provides a channel state information determining method. The following describes a channel state information determining method in an example implementation of this disclosure with reference to FIG. 3A and FIG. 3B in combination with the system architectures in FIG. 2A and FIG. 2B. The channel state information determining method in this embodiment of this disclosure may be performed by, for example, the network device shown in FIG. 2A or FIG. 2B.

FIG. 3A is a schematic flowchart of a channel state information determining method 300 according to an embodiment of this disclosure. FIG. 3B is a diagram of interaction between a base station and a terminal device in a channel state information determining method according to an embodiment of this disclosure.

As shown in FIG. 3A, the channel state information determining method 300 in this embodiment of this disclosure includes an operation S310 to an operation S330.

In the operation S310, first indication information and second indication information are sent to a terminal device.

The first indication information indicates N sounding reference signal SRS precodes. The N SRS precodes are in one-to-one correspondence with N SRS ports.

The SRS port may be understood as an antenna port for sending an SRS. The SRS is a reference signal used for uplink channel quality evaluation. The N SRS precodes are in one-to-one correspondence with the N SRS ports. Therefore, after the network device sends the first indication information to the terminal device, the terminal device may send an SRS through an SRS port, and the SRS may be loaded with an SRS precode corresponding to the SRS port. The network device may receive a precoded SRS for each SRS port.

The second indication information indicates M demodulation reference signal DMRS precodes, the M DMRS precodes are in one-to-one correspondence with M DMRS ports, any one of the M DMRS precodes includes a weighted sum of K SRS precodes, and the K SRS precodes belong to the N SRS precodes. K is an integer greater than 0 and less than or equal to N, and N is a positive integer.

The DMRS port may be understood as an antenna port for sending a DMRS corresponding to a PUSCH. The DMRS may be used for related demodulation of the PUSCH channel. The M DMRS precodes are in one-to-one correspondence with the M DMRS ports. Therefore, after the network device sends the second indication information to the terminal device, the terminal device may send a DMRS through a DMRS port, and the DMRS may be loaded with a DMRS precode corresponding to the DMRS port. The network device may receive a DMRS loaded with a DMRS precode for each DMRS port.

It should be noted that, in the N SRS ports that can be used to send SRSs, an SRS sent on each SRS port may be loaded with an SRS precode. In the channel state information determining method in this embodiment of this disclosure, "the K SRS precodes belong to the N SRS precodes. K is an integer greater than 0 and less than N, and N is a positive integer" includes the following cases: K is equal to N; and K is greater than 0 and less than N. When K is equal to N, any DMRS precode may be linearly represented by the N SRS precodes in one-to-one correspondence with the N SRS ports and weighting coefficients of the N SRS precodes. When K is greater than 0 and less than N, any DMRS precode may be linearly represented by K SRS precodes in one-to-one correspondence with K SRS ports and weighting coefficients of the K SRS precodes, and a weighting coefficient of each SRS precode in the weighting coefficients of the K SRS precodes is not 0.

Therefore, according to the channel state information determining method in this embodiment of this disclosure, when knowing both the DMRS precodes and the SRS precodes, the network device may determine weighting coefficients of the SRS precodes based on the DMRS precodes, or the network device may indicate the weighting coefficients of the SRS precodes to the terminal device, to indicate the DMRS precodes to the terminal device.

For example, the following formula (1) may be used to represent any DMRS precode by using K SRS precodes and weighting coefficients of the K SRS precodes: ${P}_{i} = {\sum }_{X = 1}^{K} {A}_{X} {V}_{X}$

In the foregoing formula (1), *Pᵢ* represents an i^{th} DMRS precode, *Vₓ* represents an SRS precode, and *A_{X}* represents a weighting coefficient of *V_{X}*.

In the operation S320, a DMRS from the terminal device is received.

In the operation S330, channel state information is determined based on the DMRS.

As shown in FIG. 3B, according to the precode indication method in this embodiment of this disclosure, a network device 301 sends first indication information to a terminal device 302 to indicate N SRS precodes in one-to-one correspondence with N SRS ports, and the terminal device 302 may receive the first indication information. Therefore, the terminal device 302 may send an SRS to the network device 301 through each SRS port. The network device 301 further sends second indication information to the terminal device 302, and the terminal device 302 may receive the second indication information. Therefore, the terminal device 302 may send a DMRS to the network device 301 through each DMRS port.

FIG. 3B schematically shows an example of a total of N SRS ports Port_{SRS-1} to Port_{SRS-N}, and further schematically shows an example of a total of M DMRS ports from Port_{DMRS-1} to Port_{DMRS-M}. It should be noted that the N SRS ports may be counted from 1 to N, or may be counted from 0 to N-1. This is not limited in this application. Similarly, the M DMRS ports may be counted from 1 to M, or may be counted from 0 to M-1.

A channel estimation result H_{SRS} obtained by the network device by performing channel estimation by using an SRS is the CSI. The DMRS may also be used for channel estimation. Therefore, the network device may obtain a DMRS-based channel estimation result H_{DMRS} based on the DMRS. The network device sends the first indication information to the terminal device, in other words, the network device further knows the SRS precodes. In this way, the network device can update H_{SRS}, in other words, update the CSI, through calculation by using the DMRS-based channel estimation result H_{DMRS}, the SRS precodes indicated by the first indication information, and the weighting coefficients of the SRS precodes corresponding to the DMRS precodes indicated by the second indication information. Because the DMRS has a higher update frequency than the SRS, an update frequency of H_{DMRS} obtained through calculation based on the channel estimation result of the DMRS is correspondingly higher. The CSI may be determined based on H_{DMRS} with the higher update frequency, to achieve an objective of shortening an SRS sending cycle, so that the obtained CSI is more accurate and a delay is shorter, thereby alleviating a CSI aging status.

According to a channel state information determining method in another embodiment of this disclosure, for example, the following embodiment may be used to implement a specific example of sending the second indication information to the terminal device: sending third indication information and fourth indication information to the terminal device.

The third indication information indicates a weighting coefficient indication bitmap or a weighting coefficient combinatorial number corresponding to a DMRS port Pᵢ, and the weighting coefficient indication bitmap or the weighting coefficient combinatorial number indicates the K SRS precodes that correspond to the DMRS port Pᵢ and whose weighting coefficients are not 0. The fourth indication information indicates the weighting coefficients of the K SRS precodes corresponding to the DMRS port Pᵢ.

Any DMRS port Pᵢ of the M DMRS ports is used as an example for description. A weighting coefficient indication bitmap or a weighting coefficient combinatorial number indicates the K SRS precodes that correspond to the DMRS port Pᵢ and whose weighting coefficients are not 0. It may be understood that, the weighting coefficient indication bitmap is in a form of a bitmap (bitmap). For example, the weighting coefficient indication bitmap may indicate "0" or "1" to indicate whether a weighting coefficient of a corresponding SRS precode is 0.

When the weighting coefficients of the K SRS precodes are weighting coefficients that are of SRS precodes and whose values are not 0 in the weighting coefficients of the N SRS precodes (it should be noted that "weighting coefficients of SRS precodes" means that a DMRS precode may be represented through linear weighting by using the SRS precodes), the weighting coefficient indication bitmap or the weighting coefficient combinatorial number may indicate K non-0 weighting coefficients of SRS precodes. The weighting coefficients of the SRS precodes are correlated to the DMRS precode, and a weighting coefficient that is of an SRS precode and whose value is 0 does not affect a value of the DMRS precode. Therefore, only a weighting coefficient that is of an SRS precode and whose value is not 0 is indicated, so that communication overheads can be reduced.

For any DMRS port Pᵢ of the M DMRS ports, communication overheads of a weighting coefficient indication bitmap may be N bits (bit), where K bits indicate that values of weighting coefficients of K SRS precodes are not 0, and (N-K) bits indicate that values of weighting coefficients of (N-K) SRS precodes are 0. Communication overheads of the weighting coefficient indication combinatorial number may be $\left⌈{log}_{2}\left({C}_{N}^{K}\right)\right⌉$ bits.

For example, the weighting coefficient indication bitmap or the weighting coefficient combinatorial number may further indicate, for example, that weighting coefficients of K*M SRS precodes corresponding to the M DMRS ports are not 0. In this case, the fourth indication information sent by the network device to the terminal device may indicate the weighting coefficients of the K*M SRS precodes corresponding to the M DMRS ports.

It should be noted that, the weighting coefficient indication bitmap or the weighting coefficient indication combinatorial number may be specific to any DMRS port Pᵢ of the M DMRS ports in the foregoing embodiment, and the weighting coefficient indication bitmap or the weighting coefficient indication combinatorial number may also be specific to the M DMRS ports, in other words, the weighting coefficient indication bitmap or the weighting coefficient indication combinatorial number may be indicated for all the M DMRS ports. Corresponding indication overheads are respectively N*M bits (bit) and $\left⌈{log}_{2}\left({C}_{N ∗ M}^{K ∗ M}\right)\right⌉$ bits.

For example, the fourth indication information may indicate, for example, amplitudes and phases of the weighting coefficients of the K precodes corresponding to the DMRS port Pᵢ, to implement a specific example of indicating the weighting coefficients of the K SRS precodes corresponding to the DMRS port Pᵢ.

According to another embodiment of this disclosure, the channel state information determining method further includes: sending first index indication information to the terminal device.

The first index indication information indicates indexes of the SRS port and the DMRS port that correspond to a weighting coefficient that is of the SRS precode and whose modulus value is the largest in weighting coefficients of R1 SRS precodes, and R1 is a product value of M and K.

For example, according to the channel state information determining method in this embodiment of this disclosure, normalization processing may be further performed on the weighting coefficients of the SRS precodes based on the weighting coefficient that is of the SRS precode and whose value is the largest. Through normalization processing, the weighting coefficients of the SRS precodes may be limited to a value range (the value range may be, for example, (0, 1]), thereby reducing indication overheads of the weighting coefficients of the SRS precodes.

Specifically, a DMRS precode corresponding to each of the M DMRS ports includes a weighted sum of K SRS precodes. Therefore, the M DMRS precodes of the M DMRS ports correspond to weighting coefficients of M*K SRS precodes. Indexes of an SRS port and a DMRS port that correspond to a weighting coefficient that is of an SRS precode and whose value is the largest in the weighting coefficients of the M*K SRS precodes are indicated to find a location corresponding to the weighting coefficient that is of the SRS precode and whose value is the largest, and the location may be represented by the SRS port and the DMRS port. Then, a specific value Aₘ (the value is a value existing before normalization processing) of the weighting coefficient that is of the SRS precode and whose value is the largest may be determined. For example, a normalized value range is (0, 1]. For any normalized weighting coefficient Aₓₙ of an SRS precode, a value of the weighting coefficient of the SRS precode may be determined based on a ratio of the specific value Aₘ of the weighting coefficient that is of the SRS precode and whose value is the largest to the normalized maximum value 1.

According to another embodiment of this disclosure, the channel state information determining method further includes: sending second index indication information to the terminal device.

The second index indication information indicates an index of an SRS port corresponding to a weighting coefficient that is of the SRS precode and whose modulus value is the largest in weighting coefficients of K SRS precodes corresponding to any DMRS port Pᵢ of the M DMRS ports.

It may be understood that, for any DMRS port Pᵢ of the M DMRS ports, an index of an SRS port corresponding to one weighting coefficient that is of an SRS precode and whose modulus value is the largest in weighting coefficients of K corresponding SRS precodes is indicated by the second indication information. Therefore, indexes of SRS ports corresponding to M weighting coefficients that are of SRS precodes and whose modulus values are the largest may be indicated for a total of M DMRS ports.

Different from that in the foregoing embodiment, in the channel state information determining method in this embodiment of this disclosure, the weighting coefficient that is of the SRS precode and whose value is the largest is specific to any DMRS port Pᵢ, and the weighting coefficient that is of the SRS precode and whose modulus value is the largest is determined from the weighting coefficients of the K SRS precodes corresponding to the DMRS port Pᵢ. However, in the channel state information determining method in the foregoing embodiment, the weighting coefficient that is of the SRS precode and whose value is the largest is specific to the M DMRS ports.

Similar to that in the foregoing embodiment, in the channel state information determining method in this embodiment of this disclosure, normalization processing may be performed on the weighting coefficients of the SRS precodes based on the weighting coefficient that is of the SRS precode and whose value is the largest. Compared with the foregoing embodiment, in this embodiment, for any DMRS port Pᵢ of the M DMRS ports, a weighting coefficient that is of an SRS precode and whose modulus value is the largest may be determined from weighting coefficients of K SRS precodes corresponding to the DMRS port Pᵢ, and normalization specific to the DMRS port Pᵢ may be further performed based on the weighting coefficient that is of the SRS precode and whose modulus value is the largest, so that a quantization error of normalization can be reduced.

For example, the second indication information may include the first index indication information or the second index indication information.

The following describes in detail a specific example of determining the CSI in the channel state determining method according to this embodiment of this disclosure.

The base station sends, to the terminal device, the first indication information indicating the N SRS precodes in one-to-one correspondence with the N SRS ports. The terminal device receives the first indication information, and sends, to the base station through the N SRS ports, SRSs loaded with the SRS precodes. The base station may receive the precoded SRSs.

The base station may perform full-space channel estimation based on the received SRSs, and an obtained channel may be represented by an eigenvector matrix on a base station side, an eigenvector matrix on a terminal device side, and a combinatorial coefficient matrix.

The eigenvector matrix on the base station side may include a plurality of eigenvectors, and the eigenvectors represent, for example, spatial domain statistical features on the base station side and frequency domain statistical features of channels.

The eigenvector matrix of the terminal device may include a plurality of eigenvectors, and the eigenvectors represent, for example, spatial domain statistical features of the terminal device.

The combinatorial coefficient matrix may be understood as, for example, a weighting coefficient matrix that is represented in a form of a matrix and that corresponds to the eigenvector matrix on the base station side and the eigenvector matrix of the terminal device. Any element in the combinatorial coefficient matrix may represent a weighting coefficient corresponding to an eigenvector on the base station side and an eigenvector of the terminal device that correspond to the element.

For example, a channel obtained based on SRS channel estimation may be represented by a formula (2): $H = U ∗ C ∗ {V}^{H}$

In the formula (2), H represents a channel estimation result, U represents the eigenvector matrix on the base station side, C represents the combinatorial coefficient matrix, *V^{H}* represents a transpose of V, and V represents the eigenvector matrix on the terminal device side.

For example, when the SRS ports are precoded based on V, one eigenvector in the eigenvector matrix V on the terminal device side corresponds to a precode of one SRS port. In this case, any element in the combinatorial coefficient matrix may represent an eigenvector that is on the base station side and that corresponds to the element and a weighting coefficient of a corresponding SRS port.

According to the channel state information determining method in this embodiment of this disclosure, for example, DMRS-based channel estimation may be represented by a formula (3): ${H}_{DMRS} = U ∗ C ∗ \left({V}^{H}∗PD\right)$

In the formula (3), PD represents a DMRS precoding matrix, and any vector in the DMRS precoding matrix represents one DMRS precode Pᵢ.

It should be noted that because a sending frequency of the DMRS is higher than a sending frequency of the SRS, the DMRS-based channel estimation is determined based on a DMRS that is sent by the terminal device and that is received by the base station, and the SRS-based channel estimation is determined based on an SRS that is sent by the terminal device and that is received by the base station, although the foregoing formula (3) and formula (2) correspond to the same combinatorial coefficient matrix C, actually, update frequency of elements in a combinatorial coefficient matrix C in the DMRS-based channel estimation is different from that in the SRS-based channel estimation. To distinguish the combinatorial coefficient matrix C in the DMRS-based channel estimation from that in the SRS-based channel estimation, in the following, the combinatorial coefficient matrix in the DMRS-based channel estimation is referred to as C_{DMRS}, and the combinatorial coefficient matrix in the SRS-based channel estimation is referred to as C_{SRS}. After receiving the DMRS, the base station may perform channel estimation based on the DMRS, to obtain the channel estimation result H_{DMRS}, and the base station may obtain the eigenvector matrix U on the base station side and the eigenvector matrix *V^{H}* on the terminal device side through uplink SRS channel estimation or by using a feedback of the terminal device. The base station further knows the DMRS precodes, in other words, the base station further knows the DMRS precoding matrix PD. Therefore, by using the foregoing formula (3), after receiving the DMRS, the base station may determine, based on the channel estimation result H_{DMRS} obtained by performing channel estimation based on the DMRS, that a DMRS-based combinatorial coefficient matrix is C_{DMRS}.

The DMRS-based combinatorial coefficient matrix C_{DMRS} may be applied to the foregoing formula (2), to obtain the channel estimation result H_{SRS} whose update frequency is consistent with that of the DMRS-based channel estimation. Therefore, according to the channel state information determining method in this embodiment of this disclosure, full-space channel estimation may be performed by using an SRS with the assistance of a DMRS, to alleviate a CSI aging status.

It should be further noted that, according to the channel state information determining method in this embodiment of this disclosure, full-space channel estimation may be performed by using an SRS with the assistance of a DMRS, and any DMRS precode includes weighting coefficients of N SRS precodes. When any DMRS precode may be represented by N SRS precodes and weighting coefficients of the N SRS precodes, and channel estimation is performed based on a DMRS, values of some elements in the combinatorial coefficient matrix are not updated. A reason is as follows: The DMRS precode may be represented as the N SRS precodes and a weighted sum of the weighting coefficients of the N SRS precodes. When a weighting coefficient of an SRS precode is 0 (or has a relatively small value), a value that is of the DMRS precode and that is mapped to the SRS precode is correspondingly 0 (or relatively small). Each SRS precode corresponds to one SRS port. When a value of a weighting coefficient of an SRS precode is 0 (or relatively small), and channel estimation is performed based on an SRS with the assistance of a DMRS, because a channel estimation result of channel estimation performed based on the SRS with the assistance of the DMRS is correlated to a DMRS precode, and the DMRS precode is not correlated to (or has relatively small correlation with) the SRS precode whose value of the weighting coefficient is 0 (or relatively small), a channel between an SRS port corresponding to the SRS precode and the base station cannot be estimated, and when channel estimation is performed based on the SRS with the assistance of the DMRS, a weighting coefficient of the SRS port corresponding to the SRS precode in the combinatorial coefficient matrix is not updated.

According to another embodiment of this disclosure, the channel state information determining method may further include: sending first SRS port indication information and/or second SRS port indication information to the terminal device.

The first SRS port indication information indicates the terminal device to send an SRS through a first SRS port in the N SRS ports. The second SRS port indication information indicates the terminal device not to send an SRS through a second SRS port in the N SRS ports.

It should be noted that the first SRS port and the second SRS port each may be a port set. In other words, the first SRS port may include one or more SRS ports, and the second SRS port may also include one or more SRS ports.

According to the channel state information determining method in this embodiment of this disclosure, the first SRS port indication information and/or the second SRS port indication information are/is sent to the terminal device. The first SRS port indication information indicates the terminal device to send an SRS through the first SRS port in the N SRS ports. The second SRS port indication information indicates the terminal device not to send an SRS through the second SRS port in the N SRS ports. In other words, an SRS may be sent through the first SRS port or an SRS other than the second SRS port in the N SRS ports of the terminal device. After receiving the SRS, the base station may perform channel estimation to update CSI. In addition, according to the channel state information determining method in this embodiment of this disclosure, an SRS is sent through the first SRS port or an SRS other than the second SRS port in the N SRS ports of the terminal device, so that the SRS port can be flexibly configured, and there is no need to send an SRS through each SRS port. Therefore, a quantity of SRS ports can be reduced, SRS pilot overheads can be reduced, or an SRS sending cycle can be shortened, to alleviate CSI channel aging (when a quantity of required SRS ports increases and an SRS pilot resource does not increase, a corresponding policy includes prolonging an SRS sending cycle. This causes CSI channel aging).

For example, the first SRS port indication information and/or the second SRS port indication information are/is indicated by DCI.

According to another embodiment of this disclosure, the channel state information determining method may further include: receiving an SRS sent by the terminal device through a third SRS port in the N SRS ports.

It should be noted that the third SRS port may be a port set. In other words, the third SRS port includes one or more SRS ports.

A weighting coefficient of the SRS precode corresponding to any DMRS port is not indicated to any SRS port Pₛᵣₛᵢ of third SRS ports in a first time period; or an accumulated modulus value corresponding to the SRS port Pₛᵣₛᵢ is less than a target modulus value, the accumulated modulus value is obtained by summing up at least one element modulus value, each element modulus value is correlated to a target moment, one of the M DMRS ports, and a weighting coefficient of the SRS precode of the SRS port Pₛᵣₛᵢ corresponding to the DMRS port, any two element modulus values correspond to different target moments and/or DMRS ports, and the target moment is determined based on a second time period.

It may be understood that, in the condition that the accumulated modulus value corresponding to the any SRS port Pₛᵣₛᵢ of the third SRS ports is less than the target modulus value, the element modulus value is correlated to the target moment, the DMRS port, and the weighting coefficient of the SRS precode, and the DMRS port is one of the M DMRS ports. Because each DMRS corresponds to the N SRS ports, one of the M DMRS ports also corresponds to any SRS port Pₛᵣₛᵢ of the third SRS ports. K SRS ports of the N SRS ports correspond to weighting coefficients of K SRS precodes. Therefore, any SRS port Pₛᵣₛᵢ of the third SRS ports also corresponds to a weighting coefficient of an SRS precode.

For example, an SRS sending condition of the SRS port may be predefined by using a protocol, and an SRS port that meets the SRS sending condition is a third SRS port. For any SRS port Pₛᵢ of the N SRS ports, if a weighting coefficient of an SRS precode corresponding to any DMRS port is not indicated to the SRS port Pₛᵢ in the first time period, or if an accumulated modulus value corresponding to the SRS port Pₛᵢ is less than the target modulus value, the SRS port Pₛᵢ meets the SRS sending condition, the SRS port Pₛᵢ belongs to the third SRS ports, and an SRS is sent on the SRS port Pₛᵢ

As described above in this embodiment of this disclosure, the DMRS precode is represented as a form of the weighted sum of the weighting coefficients of the N SRS precodes and the K SRS precodes, and therefore the parameter, namely, the weighting coefficient of the SRS precode is introduced. If a value of the weighting coefficient of the SRS precode is 0 or is relatively small, when channel estimation is performed based on an SRS with the assistance of a DMRS, channel information of an SRS port corresponding to the SRS precode is not updated or is not accurately updated. According to the channel state information determining method in this embodiment of this disclosure, for example, an SRS sending condition of the SRS port may be predefined by using a protocol. In this way, when an SRS port meets the SRS sending condition, the terminal device may send an SRS to the base station, and the base station may receive the SRS to perform channel estimation. Alternatively, indication information may be sent to flexibly configure the SRS port, and there is no need to send an SRS through each SRS port. Therefore, a quantity of SRS ports can be reduced, SRS pilot overheads can be reduced, or an SRS sending cycle can be shortened, to alleviate CSI channel aging. In addition, a modulus value of a weighting coefficient corresponding to an SRS port (the SRS port belongs to the third SRS ports) whose channel information cannot be updated or whose channel information is not accurately updated is 0 or relatively small when channel estimation is performed based on an SRS with the assistance of a DMRS. According to the channel state information determining method in this embodiment of this disclosure, a third SRS port corresponding to a weighting coefficient whose modulus value is 0 or relatively small may be determined from the N SRS ports by using an SRS sending condition defined in terms of a time period or a modulus value, and the terminal device sends an SRS through the third SRS port, so that the base station receives the SRS sent through the third SRS port and can obtain CSI, to resolve a problem that CSI ages because channel information corresponding to the third SRS port is not updated or not accurately updated.

For example, the first time period and/or the second time period are/is determined based on an SRS sending cycle, and the target moment is any moment at which the DMRS is received in the second time period.

For example, the first time period and/or the second time period may be, for example, one or more SRS sending cycles.

For example, the first time period and/or the second time period may alternatively be, for example, a time period corresponding to T time units before a time unit at which a next SRS is sent in an SRS sending cycle. The time unit may be, for example, a slot (slot) or a symbol (symbol).

For example, according to a channel state information determining method in another embodiment of this disclosure, the element modulus value is further correlated to a scale factor, the scale factor is correlated to a target time interval, and the target time interval represents a time interval between the target moment and a moment at which the SRS is sent next time.

For example, the following formula (4) may be used to represent calculation of an accumulated modulus value corresponding to any one of the third SRS ports: ${a}_{i} = {\sum }_{t ∈ T , k ∈ D} {β}_{t} \left|{A}_{t , k , i}\right|$

In the formula (4), *aᵢ* represents an accumulated modulus value corresponding to any third SRS port i, D represents a DMRS port set corresponding to the M DMRS ports, k represents a DMRS port k, T represents the second time period, t represents any target moment in the second time period, *βₜ* represents a scale factor corresponding to the target moment t, and *A_{t,k,i}* represents a weighting coefficient of an SRS precode corresponding to the target moment t, the DMRS port k, and the third SRS port i. The formula (4) represents an accumulated modulus value of the weighting coefficient of the SRS precode corresponding to the third SRS port in the corresponding DMRS port set and in all target moments in the second time period.

For an SRS port that cannot be updated when channel estimation is performed based on an SRS with the assistance of a DMRS, a weighting coefficient corresponding to the SRS port (the SRS port belongs to the third SRS ports) is not indicated in the first time period, or a corresponding accumulated modulus value is less than the target modulus value. According to the channel state information determining method in this embodiment of this disclosure, a third SRS port whose weighting coefficient is not updated in the combinatorial coefficient matrix may be determined from the N SRS ports by using an SRS sending condition defined in terms of a time period or a modulus value. The terminal device sends an SRS through the third SRS port, so that the base station receives the SRS sent through the third SRS port and can perform channel estimation, to resolve a problem that channel estimation is inaccurate and CSI ages because the weighting coefficient corresponding to the third SRS port is not updated.

An embodiment of this disclosure further provides a channel state information determining method. The following describes a channel state information determining method in an example implementation of this disclosure with reference to FIG. 4 in combination with the system architectures in FIG. 2A and FIG. 2B. The channel state information determining method in this embodiment of this disclosure may be performed by, for example, the terminal device shown in FIG. 2A or FIG. 2B.

FIG. 4 is a schematic flowchart of a channel state information determining method 400 according to an embodiment of this disclosure.

As shown in FIG. 4, the channel state information determining method 400 in this embodiment of this disclosure includes an operation S410 and an operation S420.

In the operation S410, first indication information and second indication information are received from a network device.

The first indication information indicates N sounding reference signal SRS precodes, and the N SRS precodes are in one-to-one correspondence with N SRS ports.

The second indication information indicates M demodulation reference signal DMRS precodes, the M DMRS precodes are in one-to-one correspondence with M DMRS ports, any one of the M DMRS precodes includes a weighted sum of K SRS precodes, and the K SRS precodes belong to the N SRS precodes. K is an integer greater than 0 and less than or equal to N, and N is a positive integer.

In the operation S420, the DMRS is sent to the network device.

The DMRS is determined based on the first indication information and the second indication information.

It should be noted that interaction in the channel state information determining method performed by the terminal device in this embodiment of this disclosure corresponds to that in the channel state information determining method performed by the network device in the foregoing embodiment. A technical principle and a technical effect of the channel state information determining method performed by the terminal device in this embodiment of this disclosure are similar to those of the channel state information determining method performed by the network device. Details are not described herein.

According to a channel state information determining method in another embodiment of this disclosure, for example, the following embodiment may be used to implement a specific example of receiving the second indication information: receiving third indication information and fourth indication information.

The third indication information indicates a weighting coefficient indication bitmap or a weighting coefficient combinatorial number corresponding to any DMRS port Pᵢ of the M DMRS ports, and the weighting coefficient indication bitmap or the weighting coefficient combinatorial number indicates the K SRS precodes that correspond to the DMRS port Pᵢ and whose weighting coefficients are not 0. The fourth indication information indicates the weighting coefficients of the K SRS precodes corresponding to the DMRS port Pᵢ.

For example, according to another embodiment of this disclosure, the channel state information determining method further includes: receiving first index indication information.

The first index indication information indicates indexes of the SRS port and the DMRS port that correspond to a weighting coefficient that is of the SRS precode and whose modulus value is the largest in weighting coefficients of R1 SRS precodes, and R1 is a product value of M and K.

For example, according to another embodiment of this disclosure, the channel state information determining method further includes: receiving second index indication information.

The second index indication information indicates an index of an SRS port corresponding to a weighting coefficient that is of the SRS precode and whose modulus value is the largest in weighting coefficients of K SRS precodes corresponding to any DMRS port Pᵢ of the M DMRS ports.

For example, according to another embodiment of this disclosure, the channel state information determining method further includes: receiving first SRS port indication information and/or second SRS port indication information.

The first SRS port indication information indicates the terminal device to send an SRS through a first SRS port in the N SRS ports, and the second SRS port indication information indicates the terminal device not to send an SRS through a second SRS port in the N SRS ports.

For example, the first SRS port indication information and/or the second SRS port indication information may be, for example, in a form of downlink control information.

For example, according to another embodiment of this disclosure, the channel state information determining method further includes: sending an SRS to the network device through a third SRS port in the N SRS ports.

A weighting coefficient of the SRS precode corresponding to any DMRS port is not indicated to any SRS port Pₛᵣₛᵢ of third SRS ports in a first time period; or an accumulated modulus value corresponding to the SRS port Pₛᵣₛᵢ is less than a target modulus value, the accumulated modulus value is obtained by summing up at least one element modulus value, each element modulus value is correlated to a target moment, one of the M DMRS ports, and a weighting coefficient of the SRS precode of the SRS port Pₛᵣₛᵢ corresponding to the DMRS port, any two element modulus values correspond to different target moments and/or DMRS ports, and the target moment is determined based on a second time period.

For example, the first time period and/or the second time period are/is determined based on an SRS sending cycle, and the target moment is any moment at which the DMRS is received in the second time period.

For example, the element modulus value is further correlated to a scale factor, the scale factor is negatively correlated to a target time interval, and the target time interval represents a time interval between the target moment and a moment at which the SRS is sent next time.

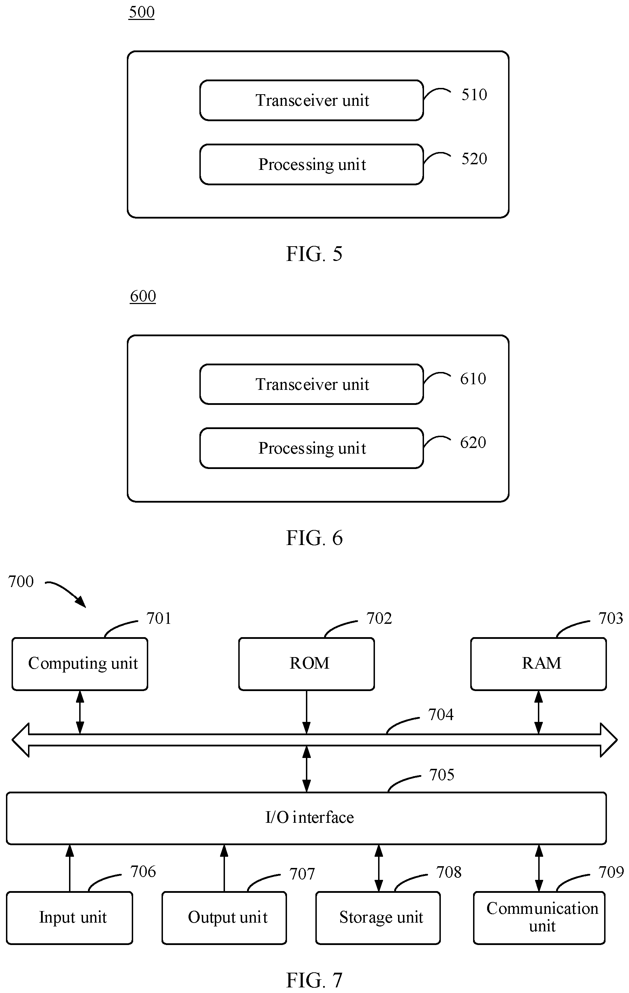

FIG. 5 is a block diagram of a channel state information determining apparatus according to an embodiment of this disclosure.

As shown in FIG. 5, the channel state information determining apparatus 500 in this embodiment of this disclosure includes, for example, a transceiver unit 510 and a processing unit 520.

The processing unit 520 is configured to determine first indication information and second indication information.

The first indication information indicates N sounding reference signal SRS precodes, and the N SRS precodes are in one-to-one correspondence with N SRS ports. The second indication information indicates M demodulation reference signal DMRS precodes, the M DMRS precodes are in one-to-one correspondence with M DMRS ports, any one of the M DMRS precodes includes a weighted sum of K SRS precodes, and the K SRS precodes belong to the N SRS precodes. K is an integer greater than 0 and less than or equal to N, and N is a positive integer.

The transceiver unit 510 is configured to: send the first indication information and the second indication information to a terminal device; and receive a DMRS from the terminal device.

The processing unit 520 is further configured to determine channel state information based on the DMRS.

For example, the transceiver unit is configured to send third indication information and fourth indication information to the terminal device. The third indication information indicates a weighting coefficient indication bitmap or a weighting coefficient combinatorial number corresponding to any DMRS port Pᵢ of the M DMRS ports, and the weighting coefficient indication bitmap or the weighting coefficient combinatorial number indicates the K SRS precodes that correspond to the DMRS port Pᵢ and whose weighting coefficients are not 0. The fourth indication information indicates the weighting coefficients of the K SRS precodes corresponding to the DMRS port Pᵢ.

For example, the transceiver unit is further configured to send first index indication information to the terminal device. The first index indication information indicates indexes of the SRS port and the DMRS port that correspond to a weighting coefficient that is of the SRS precode and whose modulus value is the largest in weighting coefficients of R1 SRS precodes, and R1 is a product value of M and K.

For example, the transceiver unit is further configured to send second index indication information to the terminal device. The second index indication information indicates an index of an SRS port corresponding to a weighting coefficient that is of the SRS precode and whose modulus value is the largest in weighting coefficients of K SRS precodes corresponding to any DMRS port Pᵢ of the M DMRS ports.

For example, the transceiver unit is further configured to send first SRS port indication information and/or second SRS port indication information to the terminal device. The first SRS port indication information indicates the terminal device to send an SRS through a first SRS port in the N SRS ports, and the second SRS port indication information indicates the terminal device not to send an SRS through a second SRS port in the N SRS ports.

For example, the first SRS port indication information and/or the second SRS port indication information are/is indicated by downlink control information DCI.

For example, the transceiver unit is further configured to receive an SRS sent by the terminal device through a third SRS port in the N SRS ports. A weighting coefficient of the SRS precode corresponding to any DMRS port is not indicated to any SRS port Pₛᵣₛᵢ of third SRS ports in a first time period; or an accumulated modulus value corresponding to the SRS port Pₛᵣₛᵢ is less than a target modulus value, the accumulated modulus value is obtained by summing up at least one element modulus value, each element modulus value is correlated to a target moment, one of the M DMRS ports, and a weighting coefficient of the SRS precode of the SRS port Pₛᵣₛᵢ corresponding to the DMRS port, any two element modulus values correspond to different target moments and/or DMRS ports, and the target moment is determined based on a second time period.

For example, the first time period and/or the second time period are/is determined based on an SRS sending cycle, and the target moment is any moment at which the DMRS is received in the second time period.

For example, the element modulus value is further correlated to a scale factor, the scale factor is negatively correlated to a target time interval, and the target time interval represents a time interval between the target moment and a moment at which the SRS is sent next time.

FIG. 6 is a block diagram of a channel state information determining apparatus according to another embodiment of this disclosure.

As shown in FIG. 6, the channel state information determining apparatus 600 in this embodiment of this disclosure includes, for example, a transceiver unit 610 and a processing unit 620.

The transceiver unit 610 is configured to receive first indication information and second indication information from a network device. The first indication information indicates N sounding reference signal SRS precodes, and the N SRS precodes are in one-to-one correspondence with N SRS ports. The second indication information indicates M demodulation reference signal DMRS precodes, the M DMRS precodes are in one-to-one correspondence with M DMRS ports, any one of the M DMRS precodes includes a weighted sum of K SRS precodes, and the K SRS precodes belong to the N SRS precodes. K is an integer greater than 0 and less than or equal to N, and N is a positive integer.

The processing unit 620 is configured to determine a DMRS based on the first indication information and the second indication information.

The transceiver unit 610 is further configured to send the DMRS to the network device.

For example, the transceiver unit is further configured to receive third indication information and fourth indication information. The third indication information indicates a weighting coefficient indication bitmap or a weighting coefficient combinatorial number corresponding to any DMRS port Pᵢ of the M DMRS ports, and the weighting coefficient indication bitmap or the weighting coefficient combinatorial number indicates the K SRS precodes that correspond to the DMRS port Pᵢ and whose weighting coefficients are not 0. The fourth indication information indicates the weighting coefficients of the K SRS precodes corresponding to the DMRS port Pᵢ.

For example, the transceiver unit is further configured to receive first index indication information. The first index indication information indicates indexes of the SRS port and the DMRS port that correspond to a weighting coefficient that is of the SRS precode and whose modulus value is the largest in weighting coefficients of R1 SRS precodes, and R1 is a product value of M and K.

For example, the transceiver unit is further configured to receive second index indication information. The second index indication information indicates an index of an SRS port corresponding to a weighting coefficient that is of the SRS precode and whose modulus value is the largest in weighting coefficients of K SRS precodes corresponding to any DMRS port Pᵢ of the M DMRS ports.

For example, the transceiver unit is further configured to receive first SRS port indication information and/or second SRS port indication information. The first SRS port indication information indicates the terminal device to send an SRS through a first SRS port in the N SRS ports, and the second SRS port indication information indicates the terminal device not to send an SRS through a second SRS port in the N SRS ports.

For example, the transceiver unit is further configured to send an SRS to the network device through a third SRS port in the N SRS ports. A weighting coefficient of the SRS precode corresponding to any DMRS port is not indicated to any SRS port Pₛᵣₛᵢ of third SRS ports in a first time period; or an accumulated modulus value corresponding to the SRS port Pₛᵣₛᵢ is less than a target modulus value, the accumulated modulus value is obtained by summing up at least one element modulus value, each element modulus value is correlated to a target moment, one of the M DMRS ports, and a weighting coefficient of the SRS precode of the SRS port Pₛᵣₛᵢ corresponding to the DMRS port, any two element modulus values correspond to different target moments and/or DMRS ports, and the target moment is determined based on a second time period.

For example, the first time period and/or the second time period are/is determined based on an SRS sending cycle, and the target moment is any moment at which the DMRS is received in the second time period.

For example, the element modulus value is further correlated to a scale factor, the scale factor is negatively correlated to a target time interval, and the target time interval represents a time interval between the target moment and a moment at which the SRS is sent next time.

It should be understood that, the embodiment shown in FIG. 5 in the apparatus part of this disclosure is correspondingly the same as or similar to the embodiment performed by the network device in the method part of this disclosure, the embodiment shown in FIG. 6 in the apparatus part of this disclosure is correspondingly the same as or similar to the embodiment performed by the terminal device in the method part of this disclosure, and to-be-resolved technical problems and to-be-achieved technical effects are also correspondingly the same or similar. Details are not described herein in this disclosure.

According to an embodiment of this disclosure, this disclosure further provides a communication device, a computer-readable storage medium, and a computer program product.

FIG. 7 is a block diagram of an example communication device 700 that may be used to implement an embodiment of this disclosure. The communication device includes various forms of digital computers, such as a laptop computer, a desktop computer, a workbench, a personal digital assistant, a server, a blade server, a mainframe computer, and another suitable computer. The communication device may also include various forms of mobile apparatuses, such as personal digital processing, a cellular phone, a smartphone, a wearable device, and other similar computing apparatuses. The components shown in this specification, connections and relationships thereof, and functions thereof are merely used as examples, and are not intended to limit the implementations of this disclosure described and/or required in this specification.

As shown in FIG. 7, the communication device 700 includes a compute unit 701. The compute unit 701 may perform various appropriate actions and processing according to a computer program stored in a read-only memory (read-only memory, ROM) 702 or a computer program loaded from a storage unit 708 to a random access memory (random access memory, RAM) 703. The RAM 703 may further store various programs and data required for operations of the communication device 700. The compute unit 701, the ROM 702, and the RAM 703 are connected to each other through a bus 704. An input/output (input/output, I/O) interface 705 is also connected to the bus 704.

A plurality of components in the communication device 700 are connected to the I/O interface 705, and include: an input unit 706, for example, a keyboard or a mouse; an output unit 707, for example, various types of displays or speakers; the storage unit 708, for example, a magnetic disk or an optical disc; and a communication unit 709, for example, a network adapter, a modem, or a wireless communication transceiver. The communication unit 709 allows the device 700 to exchange information/data with another device through a computer network, for example, the internet, and/or various telecommunication networks.

The compute unit 701 may be various general-purpose and/or dedicated processing components having processing and computing capabilities. Some examples of the compute unit 701 include but are not limited to a central processing unit (central processing unit, CPU), a graphics processing unit (graphics processing unit, GPU), various dedicated artificial intelligence (artificial intelligence, AI) computing chips, various compute units running machine learning model algorithms, a digital signal processor (digital signal processor, DSP), and any appropriate processor, controller, microcontroller, and the like. The compute unit 701 performs the methods and processing described above, for example, the channel state information determining method. For example, in some embodiments, the foregoing method may be implemented as a computer software program. The computer software program is tangibly included in a machine-readable medium, for example, the storage unit 708. In some embodiments, some or all of computer programs may be loaded and/or installed to the communication device 700 through the ROM 702 and/or the communication unit 709. When the computer program is loaded to the RAM 703 and executed by the compute unit 701, one or more steps of the channel state information determining method described above may be performed. Alternatively, in another embodiment, the compute unit 701 may be configured to perform the channel state information determining method in any other appropriate manner (for example, by using firmware).

Various implementations of the systems and technologies described above in this specification may be implemented in a digital electronic circuit system, an integrated circuit system, a field programmable gate array (field programmable gate array, FPGA), an application-specific integrated circuit (application-specific integrated circuit, ASIC), an application-specific standard product (application-specific standard product, ASSP), a system on chip (system on a chip, SOC), a complex programmable logical device (complex programmable logic device, CPLD), computer hardware, firmware, software, and/or a combination thereof. These various implementations may include: being implemented in one or more computer programs. The one or more computer programs may be executed and/or interpreted in a programmable system including at least one programmable processor. The programmable processor may be a dedicated or general-purpose programmable processor, and may receive data and instructions from a storage system, at least one input apparatus, and at least one output apparatus, and transmit data and instructions to the storage system, the at least one input apparatus, and the at least one output apparatus.

Program code for implementing the method of this disclosure may be written in any combination of one or more programming languages. The program code may be provided to a processor or a controller of a general-purpose computer, a dedicated computer, or another programmable data processing apparatus, so that when the program code is executed by the processor or the controller, the functions/operations specified in the flowchart and/or the block diagram are implemented. The program code may be completely executed on a machine, partially executed on a machine, partially executed on a machine as a stand-alone software package and partially executed on a remote machine, or completely executed on a remote machine or server.

In the context of this disclosure, the machine-readable medium may be a tangible medium, and may include or store a program for use by an instruction execution system, apparatus, or device or used in combination with the instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination of the foregoing content. A more specific example of the machine-readable storage medium may include an electrical connection based on one or more lines, a portable computer disk, a hard disk, a random access memory (RAM), a read-only memory (ROM), an erasable programmable read-only memory (EPROM), an optical fiber, a compact disc read-only memory (CD-ROM), an optical storage device, a magnetic storage device, a flash memory, or any appropriate combination of the foregoing content.

To provide interaction with a user, the systems and technologies described herein may be implemented on a computer. The computer has: a display apparatus (for example, a cathode-ray tube (cathode ray tube, CRT) or a liquid crystal display (liquid crystal display, LCD) monitor) used to display information to the user; and a keyboard and a pointing apparatus (for example, a mouse or a trackball). The user may provide an input to the computer through the keyboard and the pointing apparatus. Another type of apparatus may be further configured to provide interaction with a user. For example, a feedback provided to the user may be any form of sensory feedback (for example, a visual feedback, an auditory feedback, or a tactile feedback). In addition, an input from the user may be received in any form (including a sound input, a voice input, or a tactile input).

The systems and technologies described herein may be implemented in a computing system (used as, for example, a data server) including a back-end component, a computing system (for example, an application server) including a middleware component, a computing system (for example, a user computer having a graphical user interface or a web browser, where a user may interact with an implementation of the systems and technologies described herein by using the graphical user interface or the web browser) including a front-end component, or a computing system including any combination of the back-end component, the middleware component, or the front-end component. Components of the system may be interconnected through digital data communication (for example, a communication network) in any form or medium. An example of the communication network includes: a local area network (local area network, LAN), a wide area network (wide area network, WAN), and the internet.

A computer system may include a client and a server. The client and the server are usually far away from each other and usually interact through a communication network. A relationship between the client and the server is generated by running computer programs, having a client-server relationship with each other, on corresponding computers.

It should be understood that steps may be reordered, added, or deleted by using the foregoing various forms of procedures. For example, the steps described in this disclosure may be performed in parallel, may be sequentially performed, or may be performed in a different sequence, provided that an expected result of the technical solutions disclosed in this disclosure can be implemented. This is not limited herein in this specification.

The foregoing specific implementations do not constitute a limitation on the protection scope of this disclosure. A person skilled in the art should understand that various modifications, combinations, sub-combinations, and substitutions may be made based on a design requirement and another factor. Any modification, equivalent replacement, improvement, and the like made in the spirit and principle of this disclosure shall fall within the protection scope of this disclosure.

## Claims

1. A channel state information determining method, comprising:
sending first indication information and second indication information to a terminal device, wherein the first indication information indicates N sounding reference signal SRS precodes, and the N SRS precodes are in one-to-one correspondence with N SRS ports; and the second indication information indicates M demodulation reference signal DMRS precodes, the M DMRS precodes are in one-to-one correspondence with M DMRS ports, any one of the M DMRS precodes comprises a weighted sum of K SRS precodes, and the K SRS precodes belong to the N SRS precodes, wherein K is an integer greater than 0 and less than or equal to N, and N is a positive integer;
receiving a DMRS from the terminal device; and
determining channel state information based on the DMRS.

2. The method according to claim 1, wherein sending the second indication information to the terminal device comprises:
sending third indication information and fourth indication information to the terminal device, wherein the third indication information indicates a weighting coefficient indication bitmap or a weighting coefficient combinatorial number corresponding to any DMRS port Pᵢ of the M DMRS ports, and the weighting coefficient indication bitmap or the weighting coefficient combinatorial number indicates the K SRS precodes that correspond to the DMRS port Pᵢ and whose weighting coefficients are not 0; and the fourth indication information indicates the weighting coefficients of the K SRS precodes corresponding to the DMRS port Pᵢ.

3. The method according to claim 1, further comprising:
sending first index indication information to the terminal device, wherein the first index indication information indicates indexes of the SRS port and the DMRS port that correspond to a weighting coefficient that is of the SRS precode and whose modulus value is the largest in weighting coefficients of R1 SRS precodes, and R1 is a product value of M and K.

4. The method according to claim 1, further comprising:
sending second index indication information to the terminal device, wherein the second index indication information indicates an index of an SRS port corresponding to a weighting coefficient that is of the SRS precode and whose modulus value is the largest in weighting coefficients of K SRS precodes corresponding to any DMRS port Pᵢ of the M DMRS ports.

5. The method according to any one of claims 1 to 4, further comprising:
sending first SRS port indication information and/or second SRS port indication information to the terminal device, wherein the first SRS port indication information indicates the terminal device to send an SRS through a first SRS port in the N SRS ports, and the second SRS port indication information indicates the terminal device not to send an SRS through a second SRS port in the N SRS ports.

6. The method according to claim 5, wherein the first SRS port indication information and/or the second SRS port indication information are/is indicated by downlink control information DCI.

7. The method according to any one of claims 1 to 4, further comprising:
receiving an SRS sent by the terminal device through a third SRS port in the N SRS ports, wherein a weighting coefficient of the SRS precode corresponding to any DMRS port is not indicated to any SRS port Pₛᵣₛᵢ of third SRS ports in a first time period; or an accumulated modulus value corresponding to the SRS port Pₛᵣₛᵢ is less than a target modulus value, the accumulated modulus value is obtained by summing up at least one element modulus value, each element modulus value is correlated to a target moment, one of the M DMRS ports, and a weighting coefficient of the SRS precode of the SRS port Pₛᵣₛᵢ corresponding to the DMRS port, any two element modulus values correspond to different target moments and/or DMRS ports, and the target moment is determined based on a second time period.

8. The method according to claim 7, wherein the first time period and/or the second time period are/is determined based on an SRS sending cycle, and the target moment is any moment at which the DMRS is received in the second time period.

9. The method according to claim 7, wherein the element modulus value is further correlated to a scale factor, the scale factor is negatively correlated to a target time interval, and the target time interval represents a time interval between the target moment and a moment at which the SRS is sent next time.

10. A channel state information determining method, comprising:
receiving first indication information and second indication information from a network device, wherein the first indication information indicates N sounding reference signal SRS precodes, and the N SRS precodes are in one-to-one correspondence with N SRS ports; and the second indication information indicates M demodulation reference signal DMRS precodes, the M DMRS precodes are in one-to-one correspondence with M DMRS ports, any one of the M DMRS precodes comprises a weighted sum of K SRS precodes, and the K SRS precodes belong to the N SRS precodes, wherein K is an integer greater than 0 and less than or equal to N, and N is a positive integer; and
sending a DMRS to the network device, wherein the DMRS is determined based on the first indication information and the second indication information.

11. The method according to claim 10, wherein receiving the second indication information comprises:
receiving third indication information and fourth indication information, wherein the third indication information indicates a weighting coefficient indication bitmap or a weighting coefficient combinatorial number corresponding to any DMRS port Pᵢ of the M DMRS ports, and the weighting coefficient indication bitmap or the weighting coefficient combinatorial number indicates the K SRS precodes that correspond to the DMRS port Pᵢ and whose weighting coefficients are not 0; and the fourth indication information indicates the weighting coefficients of the K SRS precodes corresponding to the DMRS port Pᵢ.

12. The method according to claim 10, further comprising:
receiving first index indication information, wherein the first index indication information indicates indexes of the SRS port and the DMRS port that correspond to a weighting coefficient that is of the SRS precode and whose modulus value is the largest in weighting coefficients of R1 SRS precodes, and R1 is a product value of M and K.

13. The method according to claim 10, further comprising:
receiving second index indication information, wherein the second index indication information indicates an index of an SRS port corresponding to a weighting coefficient that is of the SRS precode and whose modulus value is the largest in weighting coefficients of K SRS precodes corresponding to any DMRS port Pᵢ of the M DMRS ports.

14. The method according to any one of claims 10 to 13, further comprising:
receiving first SRS port indication information and/or second SRS port indication information, wherein the first SRS port indication information indicates to send an SRS through a first SRS port in the N SRS ports, and the second SRS port indication information indicates not to send an SRS through a second SRS port in the N SRS ports.

15. The method according to any one of claims 10 to 13, further comprising:
sending an SRS to the network device through a third SRS port in the N SRS ports, wherein a weighting coefficient of the SRS precode corresponding to any DMRS port is not indicated to any SRS port Pₛᵣₛᵢ of third SRS ports in a first time period; or an accumulated modulus value corresponding to the SRS port Pₛᵣₛᵢ is less than a target modulus value, the accumulated modulus value is obtained by summing up at least one element modulus value, each element modulus value is correlated to a target moment, one of the M DMRS ports, and a weighting coefficient of the SRS precode of the SRS port Pₛᵣₛᵢ corresponding to the DMRS port, any two element modulus values correspond to different target moments and/or DMRS ports, and the target moment is determined based on a second time period.

16. The method according to claim 15, wherein the first time period and/or the second time period are/is determined based on an SRS sending cycle, and the target moment is any moment at which the DMRS is received in the second time period.

17. The method according to claim 15, wherein the element modulus value is further correlated to a scale factor, the scale factor is negatively correlated to a target time interval, and the target time interval represents a time interval between the target moment and a moment at which the SRS is sent next time.

18. A communication apparatus, comprising:
a processing unit, configured to determine first indication information and second indication information, wherein the first indication information indicates N sounding reference signal SRS precodes, and the N SRS precodes are in one-to-one correspondence with N SRS ports; and the second indication information indicates M demodulation reference signal DMRS precodes, the M DMRS precodes are in one-to-one correspondence with M DMRS ports, any one of the M DMRS precodes comprises a weighted sum of K SRS precodes, and the K SRS precodes belong to the N SRS precodes, wherein K is an integer greater than 0 and less than or equal to N, and N is a positive integer; and
the transceiver unit, configured to: send the first indication information and the second indication information to a terminal device; and receive a DMRS from the terminal device, wherein
the processing unit is further configured to determine channel state information based on the DMRS.

19. The apparatus according to claim 18, wherein the transceiver unit is configured to send third indication information and fourth indication information to the terminal device, wherein the third indication information indicates a weighting coefficient indication bitmap or a weighting coefficient combinatorial number corresponding to any DMRS port Pᵢ of the M DMRS ports, and the weighting coefficient indication bitmap or the weighting coefficient combinatorial number indicates the K SRS precodes that correspond to the DMRS port Pᵢ and whose weighting coefficients are not 0; and the fourth indication information indicates the weighting coefficients of the K SRS precodes corresponding to the DMRS port Pᵢ.

20. The apparatus according to claim 18, wherein the transceiver unit is further configured to send first index indication information to the terminal device, wherein the first index indication information indicates indexes of the SRS port and the DMRS port that correspond to a weighting coefficient that is of the SRS precode and whose modulus value is the largest in weighting coefficients of R1 SRS precodes, and R1 is a product value of M and K.

21. The apparatus according to claim 18, wherein the transceiver unit is further configured to send second index indication information to the terminal device, wherein the second index indication information indicates an index of an SRS port corresponding to a weighting coefficient that is of the SRS precode and whose modulus value is the largest in weighting coefficients of K SRS precodes corresponding to any DMRS port Pᵢ of the M DMRS ports.

22. The apparatus according to any one of claims 18 to 21, wherein the transceiver unit is further configured to send first SRS port indication information and/or second SRS port indication information to the terminal device, wherein the first SRS port indication information indicates the terminal device to send an SRS through a first SRS port in the N SRS ports, and the second SRS port indication information indicates the terminal device not to send an SRS through a second SRS port in the N SRS ports.

23. The apparatus according to claim 22, wherein the first SRS port indication information and/or the second SRS port indication information are/is indicated by downlink control information DCI.

24. The apparatus according to any one of claims 18 to 21, wherein the transceiver unit is further configured to receive an SRS sent by the terminal device through a third SRS port in the N SRS ports, wherein a weighting coefficient of the SRS precode corresponding to any DMRS port is not indicated to any SRS port Pₛᵣₛᵢ of third SRS ports in a first time period; or an accumulated modulus value corresponding to the SRS port Pₛᵣₛᵢ is less than a target modulus value, the accumulated modulus value is obtained by summing up at least one element modulus value, each element modulus value is correlated to a target moment, one of the M DMRS ports, and a weighting coefficient of the SRS precode of the SRS port Pₛᵣₛᵢ corresponding to the DMRS port, any two element modulus values correspond to different target moments and/or DMRS ports, and the target moment is determined based on a second time period.

25. The apparatus according to claim 24, wherein the first time period and/or the second time period are/is determined based on an SRS sending cycle, and the target moment is any moment at which the DMRS is received in the second time period.

26. The apparatus according to claim 25, wherein the element modulus value is further correlated to a scale factor, the scale factor is negatively correlated to a target time interval, and the target time interval represents a time interval between the target moment and a moment at which the SRS is sent next time.

27. A communication apparatus, comprising:
a transceiver unit, configured to receive first indication information and second indication information, wherein the first indication information indicates N sounding reference signal SRS precodes, and the N SRS precodes are in one-to-one correspondence with N SRS ports; and the second indication information indicates M demodulation reference signal DMRS precodes, the M DMRS precodes are in one-to-one correspondence with M DMRS ports, any one of the M DMRS precodes comprises a weighted sum of K SRS precodes, and the K SRS precodes belong to the N SRS precodes, wherein K is an integer greater than 0 and less than or equal to N, and N is a positive integer; and
a processing unit, configured to determine a DMRS based on the first indication information and the second indication information, wherein
the transceiver unit is further configured to send the DMRS to a network device.

28. The apparatus according to claim 27, wherein the transceiver unit is further configured to receive third indication information and fourth indication information, wherein the third indication information indicates a weighting coefficient indication bitmap or a weighting coefficient combinatorial number corresponding to any DMRS port Pᵢ of the M DMRS ports, and the weighting coefficient indication bitmap or the weighting coefficient combinatorial number indicates the K SRS precodes that correspond to the DMRS port Pᵢ and whose weighting coefficients are not 0; and the fourth indication information indicates the weighting coefficients of the K SRS precodes corresponding to the DMRS port Pᵢ.

29. The apparatus according to claim 27, wherein the transceiver unit is further configured to receive first index indication information, wherein the first index indication information indicates indexes of the SRS port and the DMRS port that correspond to a weighting coefficient that is of the SRS precode and whose modulus value is the largest in weighting coefficients of R1 SRS precodes, and R1 is a product value of M and K.

30. The apparatus according to claim 27, wherein the transceiver unit is further configured to receive second index indication information, wherein the second index indication information indicates an index of an SRS port corresponding to a weighting coefficient that is of the SRS precode and whose modulus value is the largest in weighting coefficients of K SRS precodes corresponding to any DMRS port Pᵢ of the M DMRS ports.

31. The apparatus according to any one of claims 27 to 30, wherein the transceiver unit is further configured to receive first SRS port indication information and/or second SRS port indication information, wherein the first SRS port indication information indicates the terminal device to send an SRS through a first SRS port in the N SRS ports, and the second SRS port indication information indicates the terminal device not to send an SRS through a second SRS port in the N SRS ports.

32. The apparatus according to any one of claims 27 to 30, wherein the transceiver unit is further configured to send an SRS to the network device through a third SRS port in the N SRS ports, wherein a weighting coefficient of the SRS precode corresponding to any DMRS port is not indicated to any SRS port Pₛᵣₛᵢ of third SRS ports in a first time period; or an accumulated modulus value corresponding to the SRS port Pₛᵣₛᵢ is less than a target modulus value, the accumulated modulus value is obtained by summing up at least one element modulus value, each element modulus value is correlated to a target moment, one of the M DMRS ports, and a weighting coefficient of the SRS precode of the SRS port Pₛᵣₛᵢ corresponding to the DMRS port, any two element modulus values correspond to different target moments and/or DMRS ports, and the target moment is determined based on a second time period.

33. The apparatus according to claim 32, wherein the first time period and/or the second time period are/is determined based on an SRS sending cycle, and the target moment is any moment at which the DMRS is received in the second time period.

34. The apparatus according to claim 32, wherein the element modulus value is further correlated to a scale factor, the scale factor is negatively correlated to a target time interval, and the target time interval represents a time interval between the target moment and a moment at which the SRS is sent next time.

35. A communication system, wherein the system comprises the first communication apparatus according to any one of claims 18 to 26 and the second communication apparatus according to any one of claims 27 to 34.

36. A communication apparatus, comprising a processor and an interface circuit, wherein the interface circuit is configured to: receive a signal from a communication apparatus other than the communication apparatus and transmit the signal to the processor; or send a signal from the processor to a communication apparatus other than the communication apparatus; and the processor is configured to implement the method according to any one of claims 1 to 9 or 10 to 17 by using a logic circuit or by executing code instructions.

37. The communication apparatus according to claim 35, wherein the communication apparatus is a chip.

38. A chip module, comprising a transceiver component and a chip, wherein the chip is configured to perform the method according to any one of claims 1 to 9, or perform the method according to any one of claims 10 to 17.

39. A computer-readable storage medium storing computer instructions, comprising:
computer instructions, wherein when the computer instructions are executed, the computer is enabled to perform the method according to any one of claims 1 to 9 or 10 to 17.
